# EUROPEAN PATENT APPLICATION

(11) **EP 0 667 708 A1**
(43) Date of publication of application: **16.08.1995**
(21) Application number: 94301001.7
(22) Date of filing: 11.02.1994
(51) Int. Cl.: H04N 5/225, H04N 7/18, H04N 5/232

(54) **Modular imaging apparatus**

(71) Applicant: ISRAEL AIRCRAFT INDUSTRIES, LTD., Lod 70 100 (IL)
(72) Inventor: Zafrir, Eitan, Even Yehuda 40 500 (IL)
(74) Representative: Hillier, Peter

(57) **Abstract**

Imaging apparatus including self-contained sealed imaging apparatus for imaging a field of view, gimbal apparatus including two surfaces between which the imaging unit is mounted, wherein the gimbal apparatus is operative to rotate the imaging unit and mounting apparatus attached to the gimbal apparatus for mounting the gimbal apparatus onto an airborne vehicle.

## Description

### FIELD OF THE INVENTION

The present invention relates to observation technology generally and to stabilized imaging apparatus in particular.

### BACKGROUND OF THE INVENTION

Various imaging apparatus are known in the art. Example imaging apparatus are Forward Looking Infrared (FLIR) thermal imaging units for night vision and Charge Coupled Device (CCD) arrays for daytime vision.

Imaging units are often incorporated into payloads for moving vehicles, such as airplanes or space vehicles, and are utilized for imaging targets on earth. The payloads typically include a gimballing system to maintain the imaging unit in a constant direction as the vehicle moves about, to direct the line of sight (LOS) of the imaging unit towards a non-moving target and to stabilize the imaging sensor in the presence of vibrations due to vehicle movement and wind.

For example, there are FLIR payloads which include a FLIR sensor mounted in the center of a typically two degree of freedom gimbal. In order to maintain the FLIR in a gust-free environment, the payload typically also includes a dome with a window located outside of the gimballing system of the imaging unit. The dome often includes its own gimballing system which is operative to maintain the window within the LOS of the FLIR. This duplication of gimbal systems complicates the operation of the payload.

Furthermore, because the dome provides a closed environment for the FLIR sensor, the dome does not quickly dissipate heat. For this reason and due to limitations of space, most of the electronic components needed to operate the FLIR must be located outside of the gimbal system. This can be problematic if the distances between the FLIR and the electronic components affect the quality of the signal. Furthermore, split electronics require a separate box.

Prior art imaging systems are typically arranged for one type of sensor. If it is desired to change the sensor, say from a night vision sensor to a daytime sensor, the dome has to be opened, the gimbals moved and the sensor and its associated electronics and optics removed. The new sensor and its components is then placed into the gimbals and the gimbal/sensor combination is re- balanced to ensure that there are no eccentric masses. This operation is complicated and time- consuming.

### SUMMARY OF THE INVENTION

It is therefore an object of the present invention to provide a gimbal mounted imaging apparatus which overcomes the difficulties of the prior art.

There is therefore provided, imaging apparatus including self-contained sealed imaging apparatus for imaging a field of view, gimbal apparatus including two surfaces between which the imaging unit is mounted, wherein the gimbal apparatus is operative to rotate the imaging unit and mounting apparatus attached to the gimbal apparatus for mounting the gimbal apparatus onto an airborne vehicle.

Additionally, in accordance with the present invention, the imaging apparatus includes a housing and a detector and its associated components, wherein a portion of the gimbal apparatus and the imaging apparatus protrudes beneath the mounting apparatus, wherein wind flowing by the protruding portion cools the housing thereby to cool the associated components.

Moreover, in accordance with the present invention, the wind impinges upon the gimbal apparatus and wherein the protruding portion has a generally spherical shape thereby to generally reduce frictional effects of the wind.

Further, in accordance with the present invention, the self-contained imaging apparatus is inertially balanced.

Still further, the self-contained imaging apparatus is generally quickly connected to the gimbal apparatus.

Additionally, in accordance with the present invention, the detector is a night vision detector. It typically is a FPA detector. Alternatively, the detector is a daytime detector. An example daytime detector is a CCD detector.

Moreover, in accordance with the present invention, the associated components includes video stabilization apparatus for stabilizing the video output of the detector.

There is further provided, in accordance with the present invention, an airborne vehicle including imaging apparatus which includes a self-contained sealed imaging apparatus for imaging a field of view, a gimbal apparatus including two surfaces between which the imaging apparatus is attached, wherein the gimbal apparatus is operative to rotate the imaging apparatus and mounting apparatus attached to the gimbal apparatus for mounting the gimbal apparatus onto the vehicle.

Finally, in accordance with the present invention, the airborne vehicle is a remotely piloted vehicle.

### BRIEF DESCRIPTION OF THE DRAWINGS

The present invention will be understood and appreciated from the following detailed description, taken in conjunction with the drawings in which:
Figs. 1A and 1B are, respectively, combined and exploded isometric illustrations of a stabilized imaging apparatus constructed and operative in accordance with a preferred embodiment of the present invention;
Fig. 2 is a front view illustration of the apparatus of Figs. 1A and 1B showing the mechanical elements of the apparatus;
Figs. 3A and 3B are side view illustrations of two alternative imaging units useful in the apparatus of Fig. 1A, where Fig. 3A illustrates a night vision imaging unit and Fig. 3B shows a daytime imaging unit;
Fig. 4 is block diagram illustration of the operation of the apparatus of Figs. 1A and 1 B;
Fig. 5 is a flow chart illustration of the operation of a video stabilization unit forming part of the apparatus of Fig. 4;
Fig. 6 is a block diagram illustration of elements of a gimbal stabilization unit forming part of the apparatus of Fig. 4; and
Fig. 7 is a pictorial illustration of an airborne vehicle carrying the apparatus of Figs. 1A and 1 B.

### DETAILED DESCRIPTION OF A PREFERRED EMBODIMENT

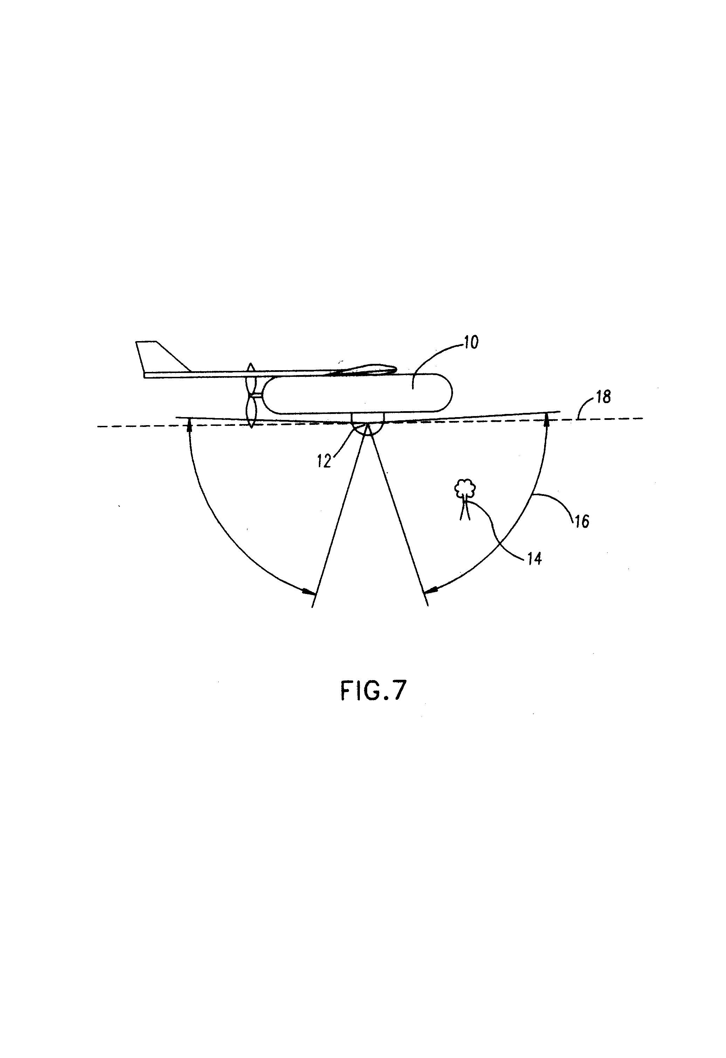

Reference is briefly made to Fig. 7 which illustrates an airborne vehicle 10, such as a Remotely Piloted Vehicle (RPV), onto which is mounted a payload 12 comprising stabilized imaging apparatus of the present invention. The apparatus is operative to image a target 14 located within its field of regard 16, which is typically hemispherical and ranges from slightly above the horizon 18 to significantly below the horizon 18.

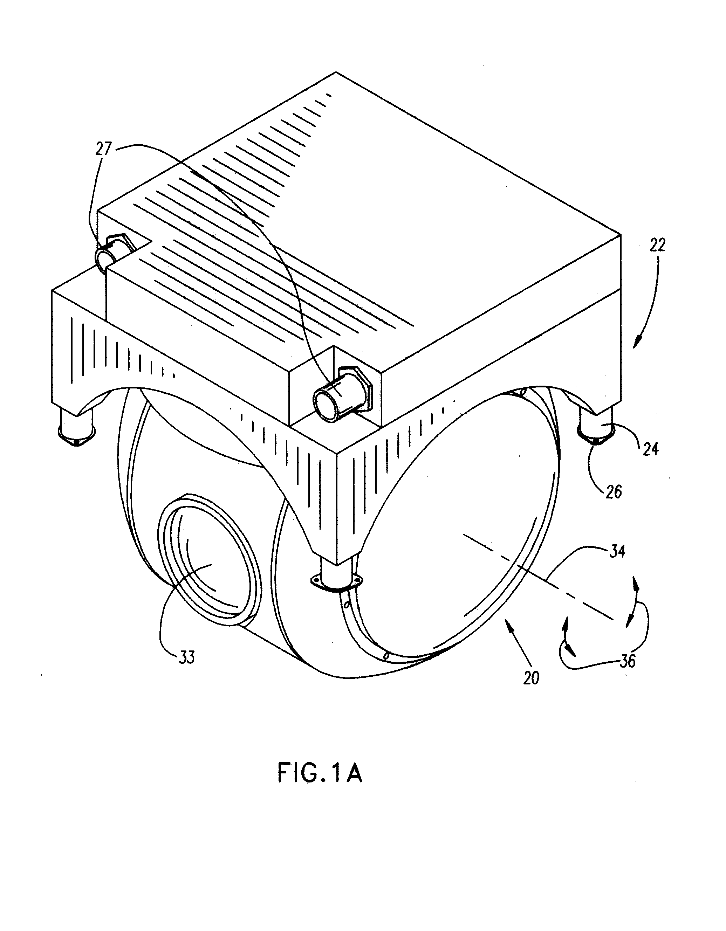

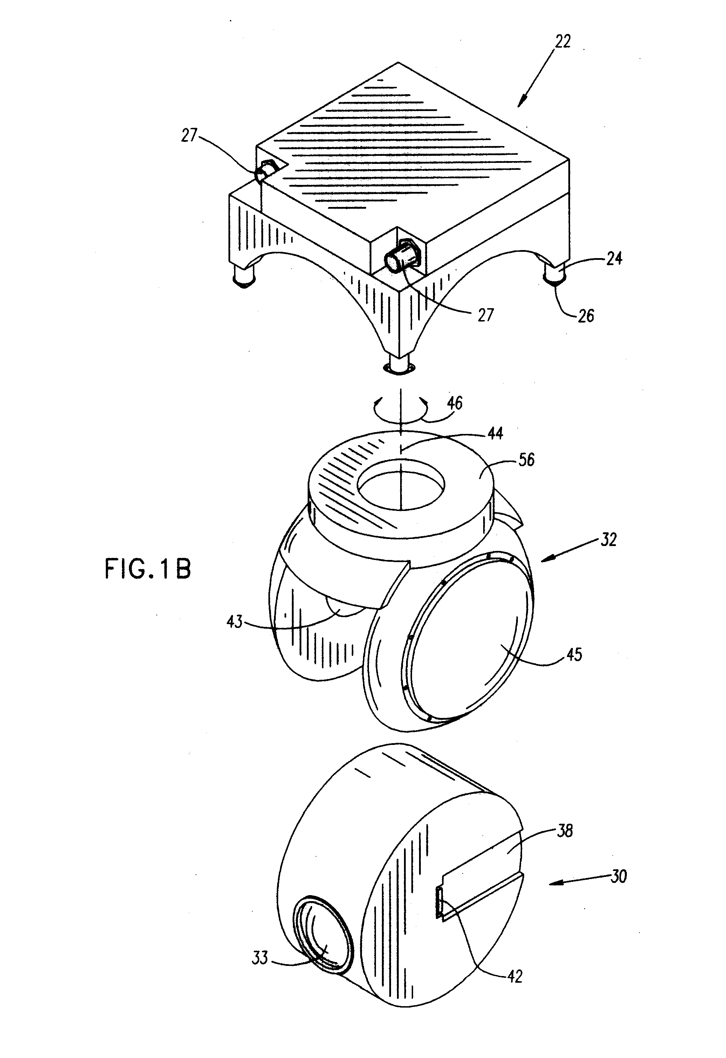

Reference is now made to Figs. 1 A and 1 B which illustrate stabilized imaging apparatus, constructed and operative in accordance with a preferred embodiment of the present invention. The apparatus typically comprises a stabilized observation system 20 for imaging target 14 and a mounting unit 22 to which the observation system 20 is rotationally attached.

The mounting unit 22 is operative to attach the observation system 20 to a vehicle (not shown) with which the imaging unit 20 is to be flown. To that end, mounting unit 22 typically comprises legs 24 having feet 26 which are mounted to the body of the vehicle, typically via screws. Legs 24 can be comprised of shock absorbers.

Mounting unit 22 also includes a plurality of electrical connectors 27 to connect the electrical components of the apparatus of the present invention to the electrical system of the vehicle 10.

Observation system 20 typically comprises an imaging unit 30 and a two degree of freedom gimbal 32. In accordance with a preferred embodiment of the present invention, imaging unit 30 typically comprises within it the entire observation system, including an imaging detector, and generally the entire signal processing system necessary to produce continuous images of the target 14. In Figs. 1A and 1B, an outer lens 33 of the observation system is visible.

The heat which the signal processing components located within observation system 20 produce must be dissipated. To effect cooling, the wind caused by the movement of the apparatus in flight is allowed to flow directly over the observation system 20 since there is no dome as in the prior art. The portion of observation system 20 protruding below the mounting unit 22 is aerodynamically designed in a generally spherical shape thereby to generally reduce the influence of gusts in the stabilization of the observation system 20.

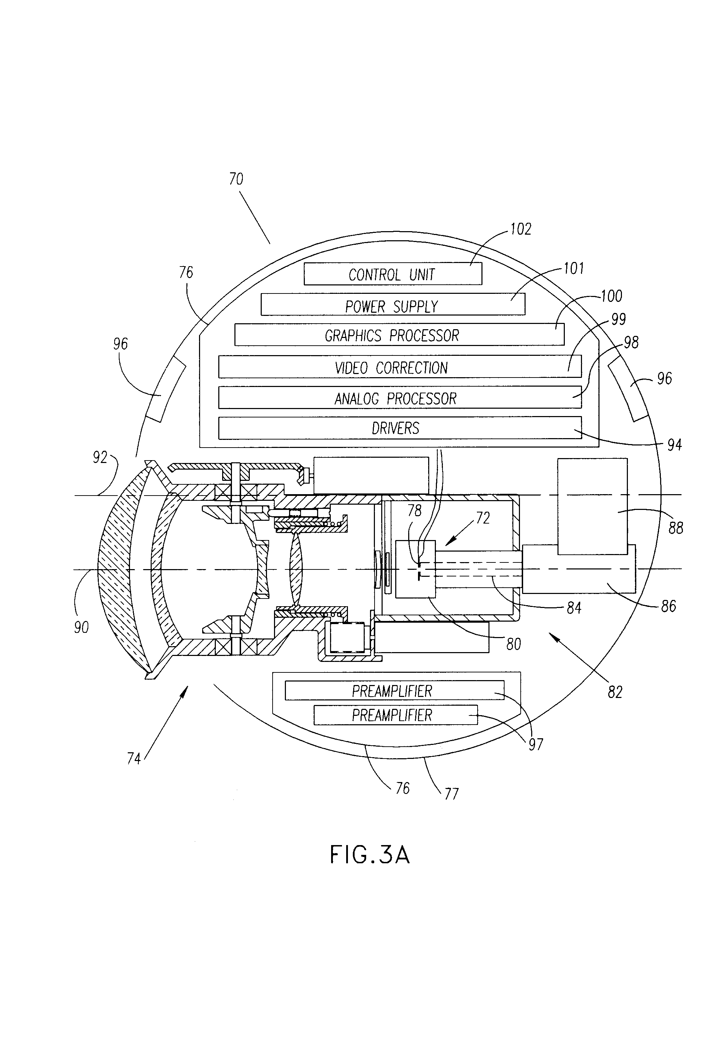

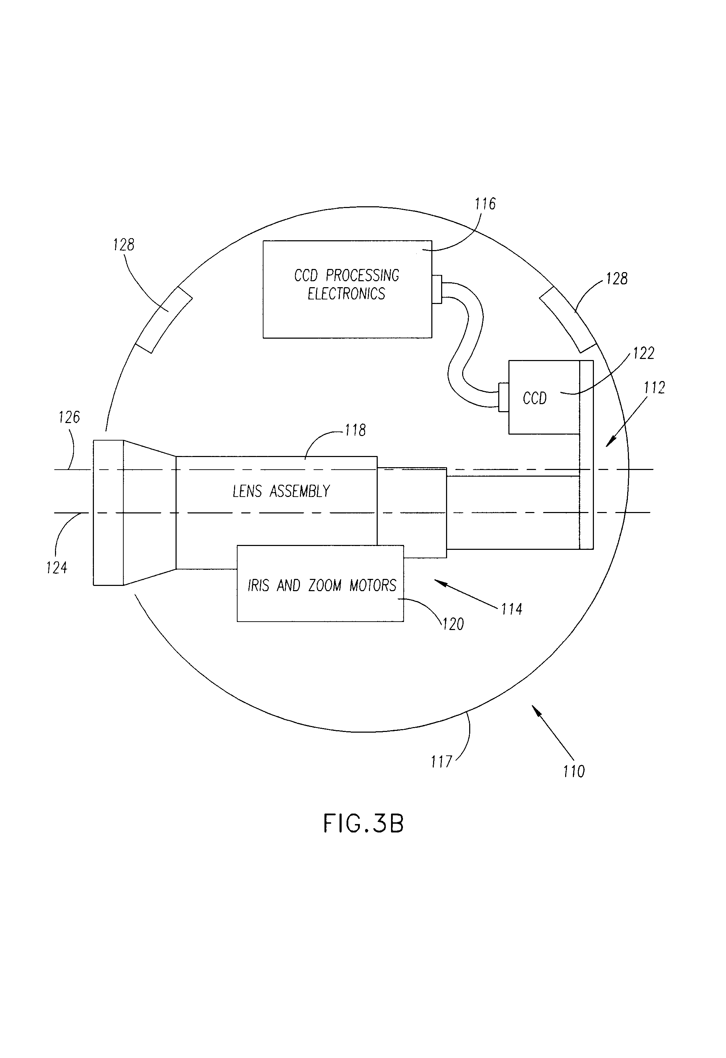

The imaging and signal processing systems are described in detail hereinbelow with reference to Figs. 3A and 3B where Fig. 3A details an example night vision imaging element and Fig. 3B details an example daytime vision imaging element.

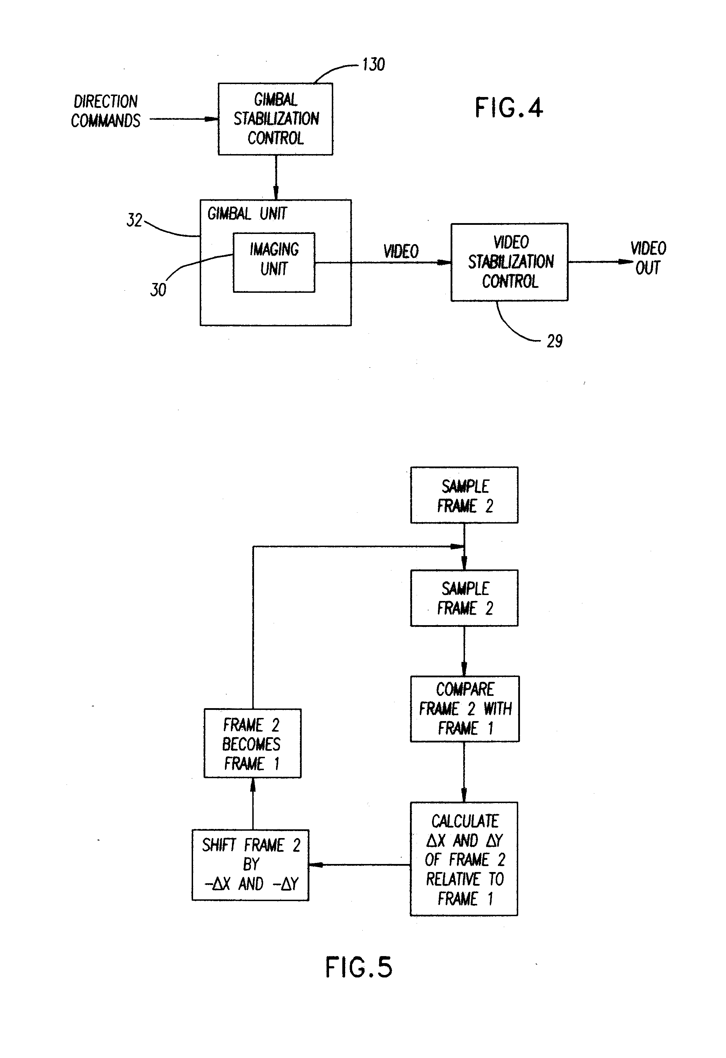

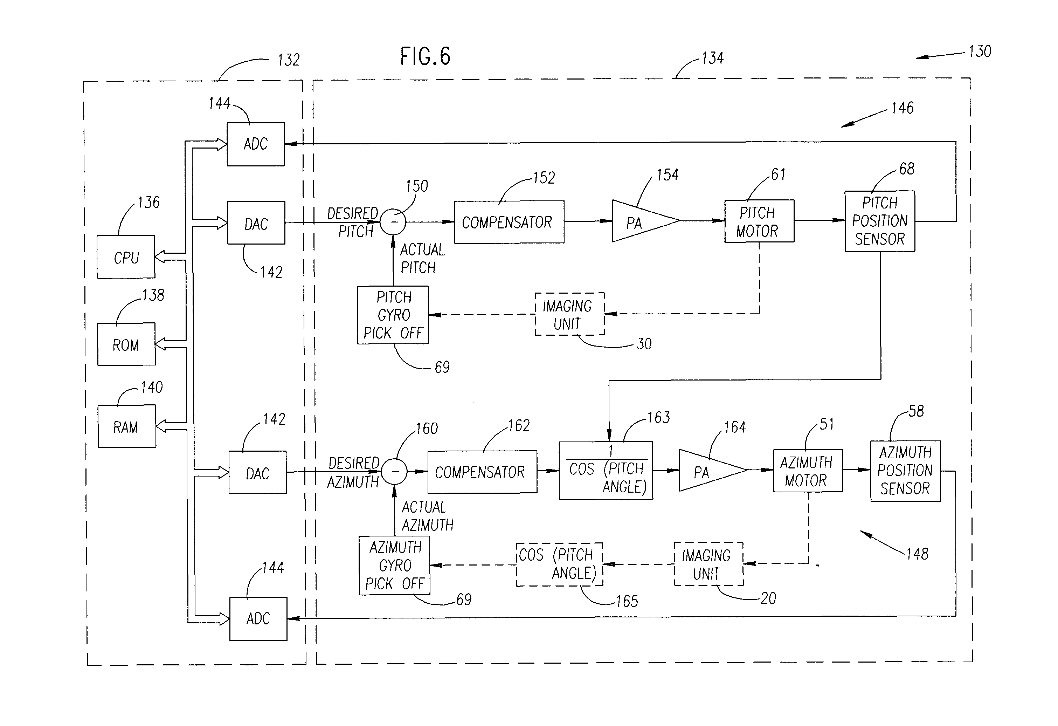

Because of the gimbal unit 32 is not covered by a dome, as in the prior art, vibrations caused by the airplane and other forces generally will not be reduced to an acceptable level. Therefore, a video stabilization control 29 is included which typically is located on top of observation system 20. The video stabilization system is described in detail hereinbelow with reference to Figs. 4 and 5.

In accordance with the present invention, the imaging unit 30 is generally cylindrical and, when connected to gimbal 32, rotates about a pitch axis 34, as illustrated by arrow 36. The extent of the pitch and azimuth rotation provided by the imaging unit 30 defines the field of regard 16 of the apparatus of the present invention.

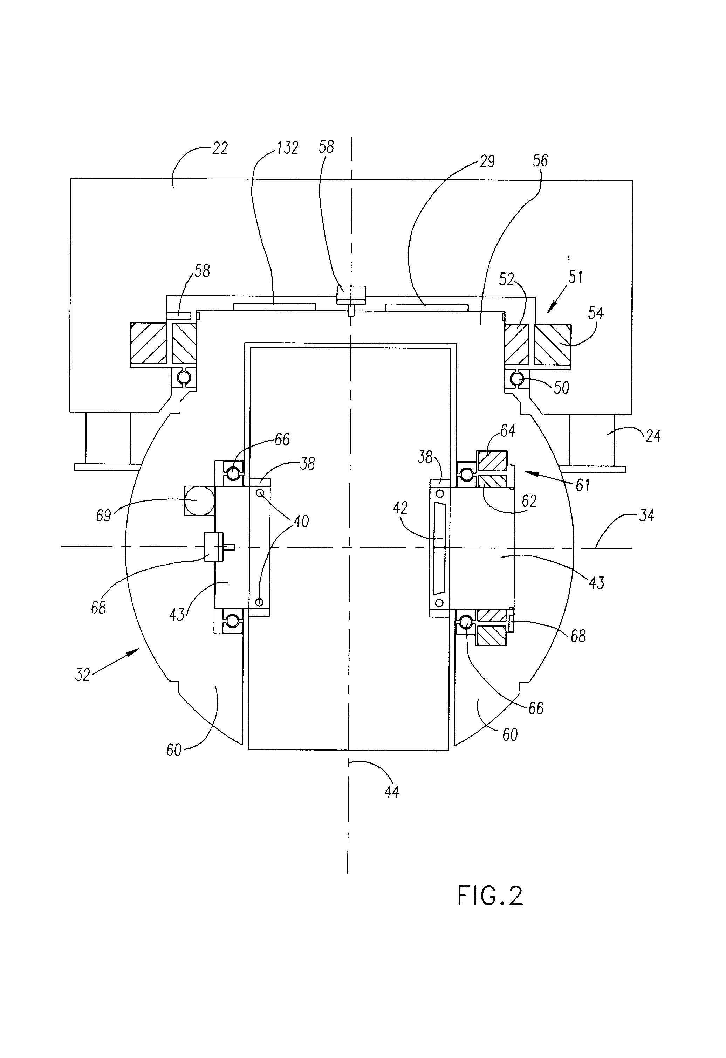

Imaging unit 30 is "slipped into" and supported by gimbal 32 via indentations 38 on each side of unit 30 and is mechanically connected to gimbal 32 via screws 40 (Fig. 2). Imaging unit 30 is electrically connected to gimbal 32 via an electrical quick connector 42, such as the MDM type.

It is a feature of the present invention that replacing one imaging unit 30 of the present invention with another is a relatively simple task. The screws 40 need to be unscrewed and then the imaging unit 30 can be slipped out of gimbal 32 and a new one put in. Because the imaging unit 30 is a closed unit which has already been balanced, there is no need, as in the prior art, to rebalance the apparatus of the present invention upon changing the type of imaging detector. Moreover, there is no need for a clean room when changing the imaging detector.

Gimbal 32 comprises a rotatable shaft 43 to which imaging unit 30 is connected and which enables its rotation. A detachable rounded cover 45 covers the components inside gimbal 32 and provides an aerodynamic shape to the observation system 20.

Gimbal 32 is rotationally connected to mounting unit 22, as described in detail hereinbelow with reference to Fig. 2, and is operative to rotate about a azimuthal axis 44 as noted by arrow 46.

It will be appreciated that the combination of the rotation of gimbal 32 about axis 44 and the rotation of imaging unit 30 about axis 34 provides two degrees of rotation to the apparatus of the present invention.

Reference is now made to Fig. 2 which details the elements of the apparatus of Figs. 1A and 1 B. Mounting unit 22 typically comprises a high precision ball bearing 50 and a torque motor 51, comprising a rotor 52 and a stator 54, operative to selectably azimuthally orient gimbal unit 32 about axis 44.

To that end, rotor 52 and an inner race of bearings 50 are attached to a shaft 56 of gimbal unit 32 while stator 54 and an outer race of bearings 50 are attached to mounting unit 22. An azimuthal rotational position sensor 58, such as a rotary encoder, is associated with the shaft 56 for sensing its angular azimuthal orientation.

The gimbal unit 32 comprises a housing, integrally attached to shaft 56, which comprises two dome shaped elements 60 separated by a distance slightly larger than the width of imaging unit 30. The dome shape of housing elements 60 produces a roughly spherical shape when cylindrically shaped imaging unit 30 is attached therebetween. Gimbal unit 32 is typically manufactured of metal but can be of any suitable material, such as a composite material.

Rotatably attached to the center of each of housing elements 60 are the two shafts 43 to which the imaging unit 30 is attachable via screws 43 and quick connector 42. The combination of the imaging unit 30 and the shafts 43 is then operative to rotate about the pitch axis 34.

The pitch rotation is performed by a torque motor 61 comprising a rotor 62 and a stator 64 is operative, in conjunction with two high precision ball bearings 66, to rotate shafts 43, thereby providing pitch motion. Rotor 62 and the inner races of bearings 66 are attached to shaft 43 and stator 64 and the outer races of bearings 66 are attached to housing elements 60.

A pitch rotary positional sensor 68, such as a rotary encoder, is associated with one of shafts 43 for measuring its angular pitch orientation.

A two degree of freedom gyroscope 69, located at the junction of one of shafts 43 and the gimbal unit 32, measures the pitch and azimuthal inertial velocity of the apparatus of the present invention.

Reference is now made to Figs. 3A and 3B which illustrate the units of two alternative imaging units, a night vision imaging unit 70 and a daytime imaging unit 110, respectively.

The night vision imaging unit 70 typically comprises a dewar detector cooler (DDC) 72 for providing images in a field of view within the field of regard 16 (Fig. 7), an optical system 74 for providing light to the dewar detector cooler 72 and a signal processing system 76 for creating and processing the images provided by dewar detector cooler 72, all enclosed within a housing 77.

The dewar detector cooler 72 typically comprises an infrared (IR) detector 78, such as a Focal Plane Array (FPA) detector which can be a Platinum Silicide (PtSi) or a Mercury Cadmium Telluride (MCT) detector or other suitable detector, operative with a dewar 80 and a cryocooler 82, such as the Lilit cryocooler manufactured by Ricor of Ein Harod, Israel.

As is known in the art, cryocooler 82 typically comprises a cold finger 84, a rotary compressor 86 and a motor 88, and is operative to maintain detector 78 in a cryogenic state.

Optical system 74 can by any suitable infrared optical system operative to provide infrared images from the field of regard 16 to detector 78. Optical system 74 typically comprises at least two discrete fields of view.

Optical system 74 and dewar detector cooler 72 are aligned along an axis 90 which is perpendicular to both axes 34 and 44 of observation system 20. Axis 90 is typically parallel to an axis 92 which is the central axis of imaging unit 70.

Signal processing system 76 is typically divided into a plurality of circuit boards located within the volume of unit 70, above and below optical system 74 and dewar detector cooler 72. Signal processing system 76 is similar to prior art signal processing systems operative with IR detectors and comprises drivers 94, preamplifiers 97, an analog processor 98, a video correction unit 99, a graphics processor 100, a power supply 101, and a control unit 102.

It will be appreciated that the imaging unit 70 is balanced at the time of manufacturing such that it rotates non-eccentrically. If necessary, balancing weights 96 are placed wherever necessary to balance the imaging unit 70. It will be appreciated that once the imaging unit 70 is balanced, there is generally no need to rebalance it.

It will further be appreciated that housing 77 is operative as a heatsink for the elements of signal processing system 76 and of cryocooler 82 and is cooled by the flow of wind around it.

Daytime imaging unit 110 (Fig. 3B) typically comprises an image detection system 112, an optical system 114, a signal processing system 116, all located within a housing 117. The optical system 114 typically comprises a standard zoom lens assembly 118 with associated iris and zoom motors 120. The image detection system 112 typically comprises a CCD detector 122 and the signal processing system 116 comprises standard CCD processing electronics.

As in the previous embodiment, the optical system 114 and the image detection system 112 are aligned along an axis 124 which is perpendicular to both axes 34 and 44 of observation system 20. Axis 124 is typically parallel to an axis 126 which is the central axis of imaging unit 110.

As in the previous embodiment, the imaging unit 110 is balanced at the time of manufacturing such that it rotates non-eccentrically. If necessary, balancing weights 128 are placed wherever necessary to balance the imaging unit 110.

As in the previous embodiment, housing 117 operates as a heatsink for the elements of signal processing system 116.

It is a feature of the present invention that the imaging units 70 and 110 are sealed units thereby to maintain a clean environment for the components inside of them.

Reference is now made to Fig. 4 which illustrates, in block diagram format, the stabilization operation of the apparatus of the present invention. The stabilization is performed in two stages. An approximate stabilization is performed by a gimbal stabilization unit 130, described in more detail hereinbelow with respect to Fig. 6, which is operative to receive direction commands from an operator and to rotate the gimbal unit 32 so that the imaging unit 30 will be oriented in the desired direction.

However, the gimbal stabilization unit 130 cannot acceptably stabilize the apparatus and therefore, the quality of the output of the imaging unit 30 is not acceptable. In accordance with a preferred embodiment of the present invention, the second stabilization stage is performed by video stabilization unit 29 which operates on the video output to create a stabilized video output which is the output of the apparatus of the present invention.

Reference is now briefly made to Fig. 5 which illustrates, in flow chart format, the operation of the video stabilization unit 29 which is similar to the operation of the M100 commercial video camera manufactured by Panasonic of Japan. Fig. 5 is believed to be self-explanatory.

Reference is now made to Fig. 6 which illustrates the elements of gimbal stabilization unit 130. Unit 130 typically comprises a control unit 132 for providing commands to a gimbal drive assembly 134 which rotates the observation system 20.

The control unit 132 is typically located on top of shaft 56 (Fig. 2) and comprises a Central Processing Unit (CPU) 136, such as a 80196 microprocessor manufactured by Intel of the USA, working in conjunction with a Read Only Memory (ROM) 138 and a Random Access Memory 140. Control unit 132 also comprises Digital-to-Analog Converters (DAC) 142 and Analog-to-Digital Converters (ADC) 144 for converting signals between the analog format needed by the gimbal drive assembly 134 and the digital format needed by the CPU 136.

The gimbal drive assembly 134 is comprised of a pitch drive assembly 146 and an azimuth drive assembly 148, respectively controlling the pitch motor 61 and the azimuth motor 51. The pitch drive assembly 146 comprises a differentiator 150 which receives a desired pitch velocity signal from CPU 136 via DAC 142 and an actual pitch signal from a pitch pickoff on gyro 69.

The resultant error signal is processed by a compensator 152, comprising a proportional and integrating (PI) control system, to provide a smoothed drive signal to pitch motor 61 via a power amplifier (PA) 154.

Pitch motor 61, in response to the received drive signal, rotates the imaging unit 30, shown with a dotted line. The angle of rotation of the imaging unit 30 with respect to the vehicle 10 is measured by the pitch position sensor 68 and the velocity of rotation is measured by the pitch pick off of gyro 69, thereby closing the control loop.

Azimuth drive assembly 148 is similar in operation to pitch drive assembly 146 and thus, comprises a differentiator 160, a compensator 162 similar to compensator 152, and a power amplifier 164. However, azimuth drive assembly 148 also comprises a variable gain 163 which is a cosine function of the pitch angle received from pitch position sensor 68. Variable gain 163 is necessary since the azimuth and pitch measurements are on the same gyroscope 69 and the pitch angle is included in the azimuthal measurements, as indicated by block 165.

The output of the power amplifier 164 drives azimuth motor 51 which rotates observation system 20 in the desired direction.

It will be appreciated that the stabilized imaging apparatus of the present invention is relatively inexpensive, is less complicated mechanically and has a low weight in comparison to prior art apparatus.

It will be appreciated by persons skilled in the art that the present invention is not limited to what has been particularly shown and described hereinabove. Rather, the scope of the present invention is defined only by the claims that follow:

## Claims

1. Imaging apparatus comprising:
self-contained sealed imaging means for imaging a field of view;
gimbal means comprising two surfaces between which the imaging unit is mounted, wherein said gimbal means is operative to rotate said imaging unit; and
mounting means attached to said gimbal means for mounting said gimbal means onto an airborne vehicle.

2. Imaging apparatus according to claim 1 wherein said imaging means includes a housing and a detector and its associated components, wherein a portion of said gimbal means and said imaging means protrudes beneath said mounting means, wherein wind flowing by said protruding portion cools said housing thereby to cool said associated components.

3. Imaging apparatus according to claim 2 wherein said wind impinges upon said gimbal means and wherein said protruding portion has a generally spherical shape thereby to generally reduce frictional effects of said wind.

4. Imaging apparatus according to claim 1 and wherein said self-contained imaging means is inertially balanced.

5. Imaging apparatus according to claim 1 and wherein said self-contained imaging means is relatively quickly connected to said gimbal means.

6. Imaging means according to claim 1 and wherein said gimbal means has two rotational degrees of freedom.

7. Imaging apparatus according to claim 2 and wherein said detector is a night vision detector.

8. Imaging apparatus according to claim 7 and wherein said night vision detector is a FPA detector.

9. Imaging apparatus according to claim 2 and wherein said detector is a daytime detector.

10. Imaging apparatus according to claim 9 and wherein said daytime detector is a CCD device.

11. Imaging apparatus according to claim 2 wherein said associated components includes video stabilization means for stabilizing the video output of said detector.

12. An airborne vehicle comprising:
imaging apparatus comprising:
a self-contained sealed imaging means for imaging a field of view;
a gimbal means comprising two surfaces between which the imaging means is attached, wherein said gimbal means is operative to rotate said imaging means; and
mounting means attached to said gimbal means for mounting said gimbal means onto said vehicle.

13. Airborne vehicle according to claim 12 wherein said imaging means includes a housing and a detector and its associated components, wherein a portion of said gimbal means and said imaging means protrudes beneath said mounting means, wherein wind flowing by said protruding portion cools said housing thereby to cool said associated components.

14. Airborne vehicle according to claim 13 wherein said wind impinges upon said gimbal means and wherein said protruding portion has a generally spherical shape thereby to generally reduce frictional effects of said wind.

15. Airborne vehicle according to claim 12 and wherein said self-contained imaging means is inertially balanced.

16. Airborne vehicle according to claim 12 and wherein said self-contained imaging means is relatively quickly connected to said gimbal means.

17. Airborne vehicle according to claim 12 and wherein said gimbal means has two rotational degrees of freedom.

18. Airborne vehicle according to claim 12 and wherein said detector is a night vision detector.

19. Airborne vehicle according to claim 18 and wherein said night vision detector is a FPA detector.

20. Airborne vehicle according to claim 12 and wherein said detector is a daytime detector.

21. Airborne vehicle according to claim 20 and wherein said daytime detector is a CCD device.

22. Airborne vehicle according to claim 13 wherein said associated components includes video stabilization means for stabilizing the video output of said detector.

23. Airborne vehicle according to claim 12 which is a remotely piloted vehicle.
